# EUROPÄISCHE PATENTSCHRIFT

(11) **EP 1 737 690 B1**
(45) Veröffentlichungstag und Bekanntmachung des Hinweises auf die Patenterteilung: **09.05.2012**
(21) Anmeldenummer: 05733544.0
(22) Anmeldetag: 17.03.2005
(51) Int. Cl.: B60J 7/14, B60J 7/047

(54) **CABRIOLET-FAHRZEUG**
CONVERTIBLE
VEHICULE DE TYPE CABRIOLET

(30) Priorität: 31.03.2004 DE 102004015665
(43) Veröffentlichungstag der Anmeldung: 03.01.2007
(73) Patentinhaber: Wilhelm Karmann GmbH, 49084 Osnabrück (DE)
(72) Erfinder: KREILING, Nils, 49078 Osnabrück (DE)
(74) Vertreter: Kronthaler, Schmidt & Coll.
(86) Internationale Anmeldenummer: PCT/DE2005/000486
(87) Internationale Veröffentlichungsnummer: WO 2005/095140

(56) Entgegenhaltungen:
- DE-C1- 19 706 417
- DE-C1- 19 959 317
- US-A1- 2003 201 658
- US-B1- 6 305 735

## Beschreibung

Die Erfindung betrifft ein Cabriolet-Fahrzeug mit einem von einem Bezug überspannten Dach nach dem Oberbegriff des Anspruchs 1 sowie ein zugehöriges Fahrzeugdach.

Es sind zahlreiche Cabriolet-Fahrzeuge bekannt, die einen an einem Dachgestell gehaltenen flexiblen Dachbezug aufweisen, der im geschlossenen zustand über seitliche und längs zur Fahrtrichtung liegende Rahmenteile gespannt ist. Dabei muß nicht jedes der mehreren und im geschlossenen Zustand hintereinander anschließenden Rahmenteile am Spannen des Bezuges beteiligt sein. Solche Cabriolets werden häufig auch als Softtops bezeichnet.

Zur Bewegung des Daches ist weiter bekannt, die jeweils bezüglich der Fahrtrichtung hinteren seitlichen Rahmenteile mit starren Lenkern zu versehen, die die Rahmenteile in die Karosserie verlängern und schwenkbar mit den jeweiligen Fahrzeugseiten zugeordneten Hauptlagern verbunden sind. Hieran können Antriebe angreifen, um die Bewegung des Daches im Öffnungs- oder Schließsinn zu bewirken. Da sich die Hauptlager im wesentlichen unterhalb des hinteren Dachendes befinden, müssen die Antriebe hinreichend groß dimensioniert sein, um dem gesamten Trägheitsmoment des Daches, das an seinem freien, dem Windschutzscheibenrahmen zugewandten Ende häufig noch mit einer relativ schweren Dachspitze versehen ist, entgegenwirken zu können. Zudem ergeben sich für die Lage des hinteren Rahmenteils, des Verbindungslenkers und des Hauptlagers wie auch für die Antriebe aufgrund der Kinematik erhebliche Zwänge, die die Gestaltungsmöglichkeiten der Designer einschränken.

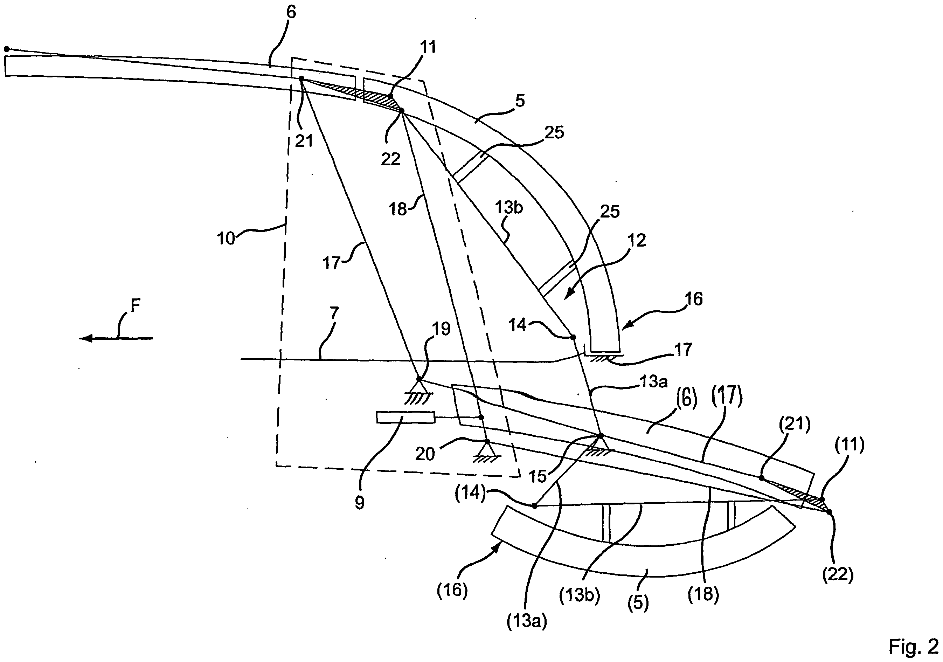

Die DE 199 59 317 C1 zeigt ein Cabriolet-Fahrzeug mit einem sog. RHT, also einem Retractable Hardtop ohne durchgehenden Dachbezug mit voneinander an Querfugen vollständig getrennten Dachteilen. Dabei muß das hintere Dachteil über einen eigenen Antrieb verfügen, um unabhängig von den weiter vorne liegenden Antrieben aufgeschwenkt werden zu können, wie dies dort in Figur 2 dargestellt ist. Eine solche Kinematik ist daher aufwendig und erlaubt wenig Flexibilität. Zudem ist die dort gezeigte Öffnung des hinteren Dachteils nach Art eines Verdeckkastendeckels nicht auf ein Fahrzeugdach mit durchgehendem Dachbezug, ein sog. Softtop, übertragbar.

Der Erfindung liegt das Problem zugrunde, bei einem Cabriolet-Fahrzeug mit einem von einem Bezug überspannten Dach eine Dachanbindung unter Verringerung der genannten Probleme zu erreichen.

Die Erfindung löst dieses Problem durch ein Cabriolet-Fahrzeug mit den Merkmalen des Anspruchs 1 sowie durch ein bewegliches Fahrzeugdach mit den Merkmalen des Anspruchs 9. Hinsichtlich vorteilhafter Ausgestaltungen der Erfindung wird auf die weiteren Ansprüche 2 bis 8 verwiesen.

Mit der erfindungsgemäßen Lösung kann durch das Angreifen des Antriebs an einem dem hinteren Rahmenteil vorgeordneten weiteren seitlichen Rahmenteil das aufzubringende Drehmoment verringert sein; die Antriebe können dann kleiner dimensioniert werden. Zudem ist es nicht mehr erforderlich, daß das hintere Rahmenteil mit dem Hauptlager in direkter Verbindung steht, da für die Antriebskraftvermittlung das hintere Rahmenteil nicht benötigt wird, sondern vielmehr selbst an das kraftvermittelnde Getriebe mit angehängt ist. Dadurch können die Ablagebewegung und die Ablagestellung erheblich flexibler und an das jeweilige Fahrzeug gut angepaßt gestaltet werden. Dabei muß das hintere Rahmenteil in seinem unteren Endbereich zumindest während der Dachbewegung keine direkte Karosserieanbindung aufweisen, sondern kann etwa im geschlossenen Zustand mit seinem unteren Ende formschlüssig auf einer Abstützung gehalten sein, aus der es beim Öffnen herausgehoben wird. Somit kann es in abgelegter Stellung etwa weiter vorne oder tiefer in der Karosserie plaziert werden, als dies mit einer festen Schwenkverbindung zu einem Hauptlager möglich wäre. Die Freiheit in der Ablagekinematik ist dadurch wesentlich erhöht.

Insbesondere kann das Nachbarrahmenteil mit dem hinteren Rahmenteil schwenkbar verbunden sein und somit bei seiner Bewegung das hintere Rahmenteil mitnehmen.

Wenn das hintere Rahmenteil über zumindest eine gesonderte bewegliche Verbindungsmechanik in Form eines Zweischlags mit einem fest mit dem Rahmenteil verbundenen Hebel mit der Karosserie verbunden ist, wobei ergibt sich eine definierte Anbindung für das hintere Rahmenteil in jeder Bewegungsphase.

Wenn zur Kraftvermittlung zwischen Antrieb und Nachbarrahmenteil ein einenends an der Karosserie und anderenends an dem Nachbarrahmenteil angreifendes Mehrgelenk, insbesondere ein viergelenk, dient, ist das kraftvermittelnde Getriebe einfach und mit Standardbauteilen herstellbar. Auch eine Parallelablage des so gehaltenen Nachbarrahmenteils wird möglich, was beispielsweise gewünscht ist, wenn jeweils nur zwei seitliche Rahmenteile vorhanden sind und dieses einen Teil der Dachspitze bildet.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:

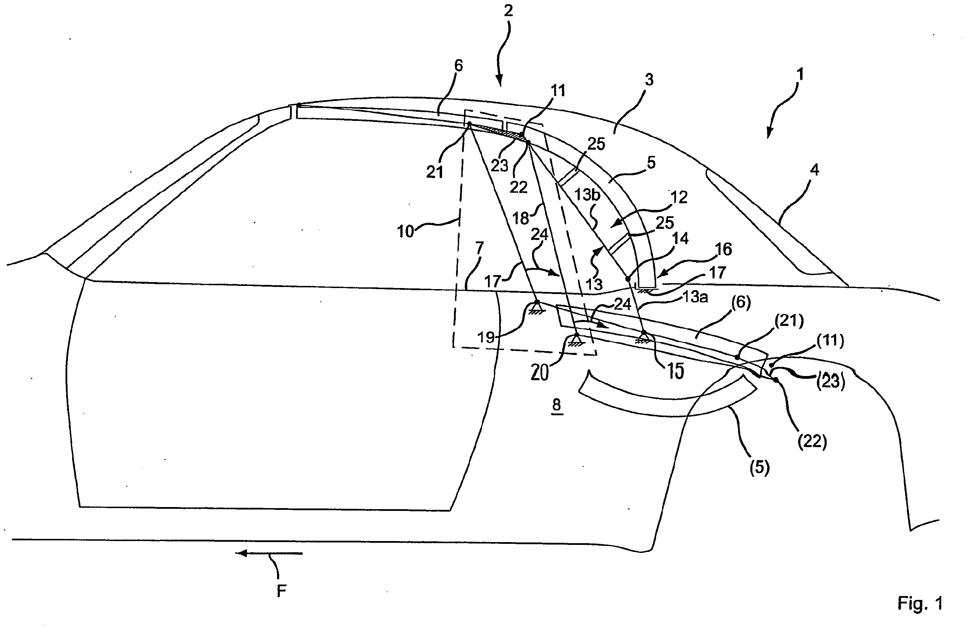

- Fig. 1: einen mittleren Bereich eines erfindungsgemäßen Cabriolet-Fahrzeugs in schematischer, teilweise abgebrochener Seitenansicht bei vollständig geschlossenem Dach,
- Fig. 2: eine schematisierte Ansicht der Dachkinematik in geschlossener und offener Dachstellung ohne eingezeichneten Dachbezug.

Das erfindungsgemäße Cabriolet-Fahrzeug 1 kann sowohl ein Zweisitzer als auch ein Cabriolet-Fahrzeug mit einem größeren Innenraum und etwa zwei Sitzreihen hintereinander sein.

Es umfaßt ein bewegliches Dach 2, das zumindest einen flexiblen Dachbezug 3 aufweist, der sich im gezeichneten Ausführungsbeispiel über das gesamte bewegliche Dach 2 erstreckt. In den Bezug 3 kann eine flexible und daher selbst faltbare Heckscheibe 4 eingelassen sein. Sie kann auch starr ausgebildet sein und beispielsweise aus Kunststoff oder Glas bestehen.

Der Dachbezug 3 ist an hier zwei bei geschlossenem Dach in Fahrzeuglängsrichtung aufeinanderfolgenden seitlichen Rahmenteilen 5, 6 zumindest teilweise gehalten. Insbesondere bei einem vier- oder mehrsitzigen Fahrzeug ist auch eine Erweiterung des tragenden Dachgestells nach vorne hin durch weitere anschließende Rahmenteile möglich. Dabei müssen nicht alle seitlichen Rahmenteile 5, 6, ... mit dem Bezug 3 in direkter Verbindung stehen.

Das hintere Rahmenteil 5 erstreckt sich von einer Fensterbrüstungslinie 7 der Karosserie 8 insgesamt mit einer Aufwärtskomponente sowie mit einer in Fahrtrichtung F weisenden Komponente. Dieses hintere Rahmenteil 5 wird häufig auch als Hauptsäule bezeichnet.

Bei geschlossenem Dach schließt sich in Fahrtrichtung F fluchtend ein weiteres seitliches Rahmenteil 6 an, das dem hinteren benachbart liegt und daher im folgenden als Nachbarrahmenteil bezeichnet wird. Das hier gezeigte Dach 2 umfaßt pro Fahrzeugseite lediglich zwei seitliche Rahmenteile 5, 6. Wie oben geschildert, können nach vorne hin weitere folgen. Insbesondere kommt auch ein Dach mit drei seitlichen Rahmenteilen in Betracht.

Das Dach 2 ist zu seinem Öffnen und Schließen über seitliche Antriebe 9 beweglich. Diese leiten ihre Antriebskraft über Vermittlung eines Getriebes 10 in das Nachbarrahmenteil 6, so daß das hintere Rahmenteil 5 anders als ansonsten üblich keine Vermittlung dieser Antriebskraft in weiterführende Dachabschnitte vornimmt.

Das hintere Rahmenteil 5 ist an das kraftvermittelnde Getriebe 10 angehängt und somit ebenfalls wie auch das Nachbarrahmenteil 6 von diesem beweglich. Um diese Kopplung zu ermöglichen, ist das Getriebe 10 um eine gesonderte Verbindungsmechanik 12, die hier eine auch als Zweischlag 13 bezeichnete Schwenkhebelkombination 13a, 13b umfaßt, ergänzt. Das hintere Rahmenteil 5 ist dabei fest mit dem oberen Schwenkhebel 13b des zweischlags 13 verbunden, etwa verschraubt. Dieser ist hingegen beispielsweise über ein Drehgelenk 11 an dem Nachbarrahmenteil 6 angebunden.

Beide Schwenkgelenke 14, 15 erlauben jeweils einen rotatorischen Freiheitsgrad, die Schwenkebenen liegen parallel oder deckungsgleich.

An seinem unteren Ende 16 weist das hintere Rahmenteil 5 keine dauerhafte Karosserieverbindung auf, sondern ist bei geschlossenem Dach 2 in einer Stützaufnahme 17 gehalten, aus der es jedoch bei Dachöffnung herausgehoben wird. Das untere Ende 16 kann daher bei der Dachablage optimiert in der Karosserie abgelegt werden, ohne auf Längen von zum Hauptlager führende Lenker Rücksicht nehmen zu müssen. Während der öffnungs- und Schließbewegung des Daches 2 ist das untere Ende 16 nur über die Verbindungsmechanik 12 und das Nachbarrahmenteil 6 mit der Karosserie 8 verbunden.

Das Getriebe 10 erstreckt sich insgesamt von der Karosserie 8 im Nahbereich der Fensterbrüstungslinie 7 zu dem Nachbarrahmenteil 6 und weist hierfür im Ausführungsbeispiel zwei nahezu parallel zueinander stehende Hebel 17, 18 auf, die im unteren Bereich an karosseriefesten Schwenklagern 19, 20 und im oberen Bereich am Nachbarrahmenteil 6 über Schwenkgelenke 21, 22 beweglich angebunden sind. Das Getriebe 10 bildet somit insgesamt mit diesen Schwenkgelenken 19, 20, 21, 22 ein Viergelenk. Anstelle des viergelenks 19, 20, 21, 22 sind auch andere Mehrgelenke, eventuell mit Kulissenführungen, möglich. Die Gelenke 21, 22 können wie hier an einem nach hinten weisendem Ausleger 23 des Nachbarrahmenteils 6 angeordnet sein.

Zum Öffnen des Daches 2 werden über den Antrieb 9 die Lenker 17, 18 in Richtung der Pfeile 24 um die karosseriefesten Gelenke 19, 20 verschwenkt.

Dabei wird das Dach 2 geringfügig angehoben, wodurch das hintere Rahmenteil 5 mit seinem unteren Ende 16 aus der Karosserieabstützung 17 herausgehoben wird. Das untere Ende 16 ist daher hier ein freies Ende des hinteren Rahmenteils 5. Es kann somit, wie in der in Fig. 2 mit eingezeichneten abgelegten Stellung der Rahmenteile 5, 6 gezeigt ist, weit vorne und unabhängig von der Lage eines Hauptlagers im Fahrzeug 1 plaziert werden. Dadurch können bestehende Raumangebote optimal genutzt werden, der Kofferraum ist vergrößert.

Bei der Öffnung ergibt sich trotz des Verzichts einer Anbindung des unteren Endes 16 des hinteren Rahmenteils 5 an die Karosserie 8 eine definierte Bewegung über den Zweischlag 13.

Die Erfindung ist sowohl bei Fahrzeugen mit manuell zu bewegenden Dächern auch bei voll- oder teilautomatischer Beweglichkeit des Daches 2 anwendbar.

## Patentansprüche

1. Cabriolet-Fahrzeug (1) mit einem Dach(2), das einen über einen über das gesamte bewegliche Dach (2) erstreckten Dachbezug (3) aufweist, wobei das Dach (2) mehrere seitliche Rahmenteile (5;6...) umfaßt, die zumindest teilweise bei geschlossenem Dach (2) den Dachbezug (3) spannen und in Fahrzeuglängsrichtung aufeinander folgen, wobei ein hinteres Rahmenteil (5) sich von einer Fensterbrüstungslinie (7) mit einer aufwärts weisenden Komponente erstreckt,
**dadurch gekennzeichnet,**
**daß** das bei geschlossenem Dach (2) dem hinteren Rahmenteil (5) in Fahrtrichtung (F) folgende Nachbarrahmenteil (6) ohne Kraftvermittlung über das hintere Rahmenteile (5) durch zumindest einen zur Dachöffnung vorgesehenen Antrieb (9) beweglich ist und das hintere Rahmenteil (5) an ein die Antriebskraft übertragendes Getriebe (10) angehängt und mit von diesem beweglich ist, wobei das hintere Rahmenteil (5) in seinem unteren Endbereich (16) zumindest während der Dachbewegung keine direkte Karosserieanbindung aufweist.

2. Cabriolet-Fahrzeug (1) nach Anspruch 1,
**dadurch gekennzeichnet,**
**daß** das Nachbarrahmenteil (6) mit dem hinteren Rahmenteil (5) schwenkbar (11) verbunden ist.

3. Cabriolet-Fahrzeug (1) nach einem der Ansprüche 1 oder 2,
**dadurch gekennzeichnet,**
**daß** das hintere Rahmenteil (5) über zumindest eine gesonderte bewegliche Verbindungsmechanik (12) mit der Karosserie (8) verbunden ist.

4. Cabriolet-Fahrzeug (1) nach Anspruch 3,
**dadurch gekennzeichnet,**
**daß** die Verbindungsmechanik (12) zwei an einem Schwenkgelenk (14) miteinander verbundene und einen Zweischlag (13) bildende Hebel (13a;13b) umfaßt.

5. Cabriolet-Fahrzeug (1) nach Anspruch 4,
**dadurch gekennzeichnet,**
**daß** das hintere Rahmenteil (5) mit einem Hebel (13b) des Zweischlags (13) fest verbunden ist.

6. Cabriolet-Fahrzeug (1) nach einem der Ansprüche 1 bis 5,
**dadurch gekennzeichnet,**
**daß** zur Kraftvermittlung zwischen Antrieb (9) und Nachbarrahmenteil (6) ein einenends an der Karosserie (8) und anderenends an dem Nachbarrahmenteil (6) angreifendes Mehrgelenk (10) dient.

7. Cabriolet-Fahrzeug (1) nach Anspruch 6,
**dadurch gekennzeichnet,**
**daß** das Mehrgelenk (10) ein Viergelenk (19;20;21;22) ist.

8. Cabriolet-Fahrzeug (1) nach Anspruch 7,
**dadurch gekennzeichnet,**
**daß** das Mehrgelenk (19;20;21;22) zwei an der Karosserie (8) gelagerte, zum Nachbarrahmenteil (6) aufwärts erstreckte und dort schwenkbeweglich angebundene Lenker (17;18) umfaßt.

9. Bewegliches Fahrzeugdach für ein Cabriolet-Fahrzeug nach einem der Ansprüche 1 bis 8.

## Claims

1. A convertible vehicle (1) with a roof (2) that comprises a roof cover (3) extending over the entire movable roof (2), said roof (2) comprising a plurality of lateral frame parts (5; 6 ...), which tighten the roof cover (3) at least partly when the roof (2) is closed and are arranged in series in the longitudinal vehicle direction, with a rear frame part (5) extending from a window-sill line (7) with an upwardly directed component,
**characterised in that**,
the adjacent frame part (6), which follows the rear frame part (5) in the direction of travel (F) when the roof (2) is closed, can be moved, without transmission of force via the rear frame part (5), by at least one drive (9) provided for opening the roof (2), and the rear frame part (5) is linked to a transmission (10) transmitting the drive force and is movable by said transmission (10), the lower end region (16) of said rear frame part (5) not being connected directly to the vehicle body at least during the roof movement.

2. The convertible vehicle (1) according to claim 1, **characterised in that** the adjacent frame part (6) is connected to the rear frame part (5) in a pivoting (11) manner.

3. The convertible vehicle (1) according to any one of claims 1 or 2, **characterised in that** the rear frame part (5) is connected to the vehicle body (8) via at least one separate movable connecting mechanism (12).

4. The convertible vehicle (1) according to claim 3, **characterised in that** the connecting mechanism (12) comprises two levers (13a; 13b) which are connected to each other by a pivot joint (14) and form a double-link joint (13).

5. The convertible vehicle (1) according to claim 4, **characterised in that** the rear frame part (5) is fixedly connected with a lever (13b) of the double-link joint (13).

6. The convertible vehicle (1) according to any one of claims 1 to 5, **characterised in that** force transmission between the drive (9) and the adjacent frame part (6) is effected by a multiple joint (10) acting on the vehicle body (8) at one end and on the adjacent frame part (6) at the other end.

7. The convertible vehicle (1) according to claim 6, **characterised in that** the multiple joint (10) is a four-bar linkage (19; 20; 21; 22).

8. The convertible vehicle (1) according to claim 7, **characterised in that** the multiple joint (19; 20; 21; 22) comprises two connecting rods (17; 18) which are supported on the vehicle body (8), extend upwards to the adjacent frame part (6) and are connected thereto in a pivoting manner.

9. Movable vehicle roof for a convertible vehicle according to any one of claims 1 to 8.

## Revendications

1. Véhicule cabriolet (1) avec un toit (2) qui présente un revêtement de toit (3) s'étendant sur le toit déplaçable (2) entier, ledit toit (2) comprenant plusieurs éléments de cadre latéraux (5; 6 ...) qui tendent le revêtement de toit (3) au moins partiellement lorsque le toit (2) est fermé et qui sont disposés les uns derrière les autres en direction longitudinale du véhicule, un élément de cadre arrière (5) s'étendant à partir d'une ligne de parapet de fenêtre (7) avec une composante dirigée vers le haut,
**caractérisé en ce que**
l'élément de cadre (6) adjacent, qui suit l'élément de cadre arrière (5) dans la direction de marche (F) lorsque le toit (2) est fermé, est déplaçable sans transmission de force de l'élément de cadre arrière (5), par au moins un entraînement (9) prévu pour l'ouverture du toit (2), et l'élément de cadre arrière (5) est relié à une transmission (10) transmettant la force d'entraînement et est déplaçable par la transmission (10), la région d'extrémité inférieure (16) de l'élément de cadre arrière (5) n'étant pas relié directement à la carrosserie au moins pendant le déplacement du toit.

2. Véhicule cabriolet (1) selon la revendication 1, **caractérisé en ce que** l'élément de cadre adjacent (6) est relié à l'élément de cadre arrière (5) de manière a pouvoir pivoter (11).

3. Véhicule cabriolet (1) selon l'une quelconque des revendications 1 ou 2, **caractérisé en ce que** l'élément de cadre arrière (5) est relié à la carrosserie (8) par au moins un mécanisme de liaison (12) déplaçable séparément.

4. Véhicule cabriolet (1) selon la revendication 3, **caractérisé en ce que** le mécanisme de liaison (12) comprend deux leviers (13a; 13b) reliés l'un à l'autre par une articulation pivotante (14) et formant une manivelle avec élément de couplage (13).

5. Véhicule cabriolet (1) selon la revendication 4, **caractérisé en ce que** l'élément de cadre arrière (5) est solidarisé avec un levier (13b) de la manivelle avec élément de couplage (13).

6. Véhicule cabriolet (1) selon l'une quelconque des revendications 1 à 5, **caractérisé en ce que** la transmission de force entre l'entraînement (9) et l'élément de cadre adjacent (6) s'effectue au moyen d'un ensemble à plusieurs articulations (10) dont une extrémité agit sur la carrosserie (8) et l'autre extrémité agit sur l'élément de cadre adjacent (6).

7. Véhicule cabriolet (1) selon la revendication 6, **caractérisé en ce que** l'ensemble à plusieurs articulations (10) est un ensemble à quatre articulations (19; 20; 21; 22).

8. Véhicule cabriolet (1) selon la revendication 7, **caractérisé en ce que** l'ensemble à plusieurs articulations (19; 20; 21; 22) comprend deux bras (17; 18) qui prennent appui sur la carrosserie (8), s'étendent vers le haut jusqu'à l'élément de cadre adjacent (6) et sont reliés à celui-ci de manière à pouvoir pivoter.

9. Toit véhicule déplaçable pour un véhicule cabriolet selon l'une quelconque des revendications 1 à 8.
